(19) **Europäisches Patentamt / European Patent Office / Office européen des brevets**

(11) **EP 4 765 222 A1**

(12) **EUROPEAN PATENT APPLICATION**
published in accordance with Art. 153(4) EPC

(43) Date of publication:
**24.06.2026 Bulletin 2026/26**

(21) Application number: **25786957.8**

(22) Date of filing: **11.04.2025**

(51) International Patent Classification (IPC):
*H01M 4/13* (2010.01)    *H01M 4/04* (2006.01)
*H01M 4/525* (2010.01)    *H01M 4/62* (2006.01)
*H01M 4/66* (2006.01)    *H01M 10/052* (2010.01)
*H01M 4/02* (2006.01)

(52) Cooperative Patent Classification (CPC):
**H01M 4/02; H01M 4/04; H01M 4/13; H01M 4/525; H01M 4/62; H01M 4/66; H01M 10/052;** Y02E 60/10

(86) International application number:
**PCT/KR2025/004958**

(87) International publication number:
**WO 2025/216585 (16.10.2025 Gazette 2025/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.04.2024 KR 20240048862**

(71) Applicant: **LG Energy Solution, Ltd.**
**Seoul 07335 (KR)**

(72) Inventors:
• **YANG, Jeong Min**
 **Daejeon 34122 (KR)**
• **PARK, Seung Yeob**
 **Daejeon 34122 (KR)**
• **OH, Sol Seon**
 **Daejeon 34122 (KR)**
• **LEE, Nam Jeong**
 **Daejeon 34122 (KR)**
• **SHIN, Dong Oh**
 **Daejeon 34122 (KR)**

(74) Representative: **Hoffmann Eitle**
**Patent- und Rechtsanwälte PartmbB**
**Arabellastraße 30**
**81925 München (DE)**

(54) **ELECTRODE MIXTURE FILM, MANUFACTURING METHOD THEREFOR, ELECTRODE COMPRISING SAME, AND SECONDARY BATTERY COMPRISING SAME**

(57) The disclosure discloses an electrode mixture film including an electrode active material, and a binder having a three-dimensional fiber network structure, wherein the electrode mixture film has an average value of shear strength of 15 N/mm² or greater, a ratio of shear strength in a TD direction to shear strength in an MD direction 0.92 to 1.08, and a standard deviation of shear strength of 0.49 or less, and the shear strength is measured by means of a surface and interfacial characteristics analysis system (SAICAS) at two or more points spaced apart at regular intervals with respect to a depth direction of the electrode mixture film. The electrode mixture film includes a binder, a three-dimensional network structure of which is not only structurally stably, but also firmly and uniformly formed within the film, so that an electrode including the same may have excellent mechanical properties and excellent resistance properties, and a secondary battery including the same may have improved output and lifespan as well as excellent durability.

EP 4 765 222 A1

**Description**

[Technical Field]

Cross-reference to Related Applications

This application claims the benefit of Korean Patent Application No. 10-2024-0048862, filed on April 11, 2024, in the Korean Intellectual Property Office, the disclosure of which is incorporated herein in its entirety by reference.

Technical Field

The disclosure relates to an electrode mixture film, a method for manufacturing the same, an electrode including the electrode mixture film, and a secondary battery including the same.

[Background Art]

A secondary battery is applied and used in small products such as digital cameras, P-DVDs, MP3Ps, mobile phones, PDAs, portable game devices, power tools, and e-bikes, as well as large products that require high power, such as electric vehicles or hybrid vehicles, and power storage devices for storing surplus generated power or renewable energy, and power storage devices for backup power.

Typically, a secondary battery is manufactured by applying an electrode active material slurry on a positive electrode current collector and a negative electrode current collector to form an electrode active material layer, and then performing drying and roll-pressing processes thereon to manufacture a positive electrode and a negative electrode, followed by stacking the positive electrode and the negative electrode on both sides of a separator to form an electrode assembly having a predetermined shape, and then accommodating the electrode assembly in a battery case, followed by injecting an electrolyte thereinto and sealing the case.

Meanwhile, in the process of drying the electrode active material, a solvent contained in the slurry evaporates, which may cause defects such as pinholes or cracks on the electrode active material layer formed on the current collector. In addition, since the inside and outside of the electrode active material slurry are not uniformly dried in the drying process, there is a risk that the quality of the electrode is degraded due to a powder floating phenomenon caused by the difference in solvent evaporation rate, that is, the phenomenon in which powder in a portion dried first rises, thereby forming a gap with a portion dried relatively later.

In order to solve the above-described problem, a drying apparatus and the like capable of adjusting the evaporation rate of a solvent are being considered such that the inside and outside of an electrode active material slurry are uniformly dried, but such drying apparatuses are very expensive and cost a significant amount of money and time in operation, and thus are disadvantageous in terms of manufacturing processability.

On the other hand, a solvent included in a typical electrode active material slurry is N-methyl-2-pyrrolidone (NMP), which has a high boiling point, so that it requires high heat energy and a very long drying furnace to dry that same, making it very disadvantageous in mass production. In addition, N-methyl-2-pyrrolidone (NMP) is a toxic material and is harmful to living things, and thus, has a disadvantage of not being environmentally friendly.

Therefore, recently, research on a dry electrode in which an electrode is manufactured without using a solvent has been actively conducted. The dry electrode is generally manufactured by laminating a free-standing type electrode mixture film, which includes an electrode active material, a binder, a conductive material, etc., on a current collector. The above-described electrode mixture film includes a process of first mixing the electrode active material, a carbon material as the conductive material, and a fiberizable binder together by a blender or the like, and fiberizing the binder by imparting shear force thereto through a process such as jet-milling or kneading, and then calendarizing an obtained mixture into a film form to manufacture a free-standing film.

Meanwhile, a film for a dry electrode requires precise control of conditions of mixing, kneading, and calendering processes in order to uniformly disperse and fiberize a binder in an active material to secure appearance and mechanical properties. However, there is a difficulty in optimizing the process conditions since there is no method for quantitatively analyzing the distribution uniformity of an active material, a conductive material, and a binder in an electrode, and also, it is not easy to secure reliability as to whether a high-quality electrode is manufactured under optimized process conditions.

In addition, a dry electrode exhibits orientation since a roll-to-roll process is performed during a manufacturing process thereof, and due to the orientation, cracks are generated in one direction or mechanical strength is weak, so that there is a problem in that the electrode breaks in a specific direction.

Accordingly, there is a demand for the development of a dry electrode with a binder whose uniformity in an electrode is accurately identified, and optimized process conditions for implementing the same, thereby having excellent appearance characteristics and mechanical properties, and having excellent performance due to improved resistance properties.

[Disclosure]

[Technical Problem]

An object of the disclosure is to provide an electrode mixture film having excellent mechanical properties and improved resistance properties due to a binder uniformly distributed in the electrode mixture film.

In addition, another object of the disclosure is to provide a method for manufacturing an electrode mixture film having the above-described properties by controlling the degree to which a binder is fiberized in a kneading process and controlling the adhesion and desorption of powder and a roll in a roll-pressing roll in which powder in a sheet-molding process is sheeted.

In addition, yet another object of the disclosure is to provide an electrode having excellent resistance properties, and outstanding durability due to excellent mechanical properties, and a secondary battery including the electrode, thereby having improved output properties and lifespan properties.

[Technical Solution]

[1] According to an embodiment of the disclosure, there is provided an electrode mixture film including an electrode active material, and a binder having a three-dimensional fiber network structure, wherein the electrode mixture film has an average value of shear strength of 15 N/mm$^2$ or greater, a ratio of shear strength in a TD direction to shear strength in an MD direction of 0.92 to 1.08, and a standard deviation of shear strength of 0.49 or less, and the shear strength is measured by means of a surface and interfacial characteristics analysis system (SAICAS) at two or more points spaced apart at regular intervals with respect to a depth direction of the electrode mixture film.

[2] In [1] above, the ratio of shear strength in the TD direction to shear strength in the MD direction may be 0.95 to 1.05.

[3] In [1] and/or [2] above, the average value of shear strength may be 15 N/mm$^2$ to 30 N/mm$^2$.

[4] In at least one among [1] to [3] above, the average value of shear strength may be 17 N/mm$^2$ to 25 N/mm$^2$.

[5] In at least one among [1] to [4] above, the standard deviation of shear strength may be 0.47 or less.

[6] In at least one among [1] to [5] above, the standard deviation of shear strength may be 0.45 or less.

[7] In at least one among [1] to [6] above, the electrode active material may include a lithium transition metal compound containing one or more selected from the group consisting of nickel (Ni), cobalt (Co), manganese (Mn), and iron (Fe).

[8] In at least one among [1] to [7] above, the binder may include polytetrafluoroethylene (PTFE).

[9] According to another embodiment of the disclosure, there is provided a method for manufacturing an electrode mixture film, the method including (S1) forming a mixture composition by mixing an electrode active material and a fiberizable binder, (S2) forming a mixed aggregate by kneading the mixture composition while applying shear force thereto for N minutes, (S3) preparing powder for an electrode by pulverizing the mixed aggregate, and (S4) in a roll-to-roll process in which the powder for an electrode is introduced at a roll temperature of T °C, manufacturing a mixture film by sheeting the powder for an electrode, wherein the product of N and T is 1700 min·°C to 2500 min·°C.

[10] In [9] above, the N may be 15 minutes to 25 minutes.

[11] In at least one among [9] and/or [10] above, the T may be 70 °C to 100 °C.

[12] In at least one among [9] to [11] above, the S4 step may include (S4a) obtaining a powder-sheeting film by powder-sheeting the powder for an electrode, and (S4b) manufacturing a mixture film by sheeting the powder-sheeting film two or more times.

[13] In at least one among [9] to [12] above, the powder-sheeting film may have an average value of shear strength of 2.5 N/mm$^2$ or greater, and a standard deviation of shear strength of 0.54 or less, the binder may form a matrix in the electrode mixture film, and the shear strength may be measured by means of a surface and interfacial characteristics analysis system (SAICAS) at two or more points spaced apart at regular intervals with respect to a depth direction of the electrode mixture film.

[14] In at least one among [9] to [13] above, the powder-sheeting film may have an average value of shear strength of 2.5 N/mm$^2$ to 5.0 N/mm$^2$.

[15] In at least one among [9] to [14] above, the powder-sheeting film may have a standard deviation of shear strength of 0.20 to 0.54.

[16] According to yet another embodiment of the disclosure, there is provided an electrode including a current collector, and the above-described electrode mixture film disposed on the current collector.

According to an embodiment, the electrode may be a positive electrode.

[17] According to still another embodiment of the disclosure, there is provided a secondary battery including the above-described electrode.

[Advantageous Effects]

An electrode mixture film of the disclosure may have outstanding durability and excellent resistance properties by being manufactured by controlling the degree to which a binder is fiberized in a kneading process and controlling the adhesion and desorption of powder and a roll in a roll-pressing roll in which powder in a sheet-molding process is sheeted, so that the binder is uniform within the film, and has constant mechanical properties in an MD direction and a TD direction, resulting in forming a structurally stable three-dimensional fiber network.

In addition, an electrode of the disclosure may have improved durability through outstanding mechanical properties by including the electrode mixture film as described above and have outstanding structural stability, and a secondary battery including the electrode may have improved output properties and lifespan properties through the electrode having the above-described characteristics.

[Mode for Disclosure]

Hereinafter, a more detailed description will be provided.

The terms and words used in the present description and its claims should not be construed in its ordinary or dictionary sense, but should be interpreted in a sense and concept consistent with the technical ideas of the disclosure, based on the principle that an inventor may adequately define the concept of the terms in order to best describe his/her invention.

In the disclosure, "volume cumulative particle diameter $D_{50}$" means a particle diameter corresponding to 50% of the volume accumulation in a particle diameter distribution curve of particles. The $D_{50}$ may be measured by, for example, a laser diffraction method. The laser diffraction method generally enables measurement of a particle diameter from a sub-micron region to several millimeters, so that results of high reproducibility and high resolution may be obtained.

In the disclosure, "average particle diameter" means an arithmetic mean value calculated after measuring the particle diameter of at least 30 particles observed in a scanning electron microscope image, when observed at a magnification of 5,000 to 20,000 times using a scanning electron microscope. In this case, the particle diameter refers to the diameter of the longest axis of a particle. Although the "volume cumulative particle diameter $D_{50}$" and the "average particle diameter" are measured using different methods, their values may be derived similarly, and a volume cumulative particle diameter $D_{50}$ measured in a powder state may have a value similar to an average particle diameter observed in a scanning electron microscope image of an electrode within a margin of error, wherein the electrode is manufactured from the powder.

In the disclosure, "mixture composition" means a mixture including an electrode active material and a binder (in some cases, a conductive material), which have been physically mixed to a uniform dispersion phase, and may be a mixture in a powder phase as a product of a mixing process (mixing process) in accordance with the disclosure, and may be one in which no solvent is substantially involved. Here, the meaning of no substantial involvement of a solvent means that when the mixture composition is obtained by mixing, a solvent is not introduced or only a trace amount of solvent is introduced.

In the disclosure, "mixed aggregate" is a product of a kneading process (kneading process) in accordance with the disclosure, in which the mixture composition is subjected to shear force, thereby fiberizing the binder to allow the mixture in the powder state to be bonded or connected to each other and converted into an aggregate in a paste state, wherein the product is 100% solid.

In the disclosure, "powder for an electrode" may mean a material in a state in which the mixed aggregate is pulverized, thereby having a smaller particle size and being in a powder phase, and it may mean an electrode material in a powder form including an electrode active material and a binder, and optionally a conductive material.

In the disclosure, "electrode mixture film" may mean an electrode mixture film manufactured in the form of a free-standing type single sheet by using an "electrode mixture" including an electrode active material, a conductive material, and a binder, without the involvement of a solvent, or may refer to an electrode mixture layer in the state of being laminated on a current collector. In the disclosure, the term 'free-standing type' means that it may maintain its independent form without relying on other members, and that it may move or handle on its own. As to be described below, the electrode mixture film may be formed by pressing powder for an electrode. For example, the electrode mixture film may have a shape in which powder for an electrode powder is integrated by pressing, thereby having a layered structure.

In the disclosure, "powder-sheeting film" means a film from the time powder for an electrode forms a sheet form through a powder-sheeting process in which the powder for an electrode first passes through a roll-pressing roll in a roll-to-roll process (e.g., calendering process) until the time the sheet passes through the last roll-pressing roll in the roll-to-toll process, and may be a free-standing sheet, which may be a sheet relatively weak in self-supporting force. Here, the 'powder-sheeting' means that powder for an electrode is molded into the form of a free-standing sheet by a roll-pressing roll of a roll-to-roll process, wherein the 'sheeting' is a process performed in a process of manufacturing the powder-sheeting film into an electrode mixture film, which may mean a process of roll-pressing the powder-sheeting film.

In the disclosure, "dry electrode" means an electrode with no substantial involvement of a solvent during a manufacturing process, wherein the electrode is manufactured by introducing no solvent or a trace amount of solvent, and for example, may mean an electrode in which an active material layer has a support structure formed through fiberization of a binder or is supported by being compressed under high pressure.

In the disclosure, "three-dimensional fiber network structure" may mean a structure that may be formed by fiberization of a binder in a process of sheet-molding an electrode mixture film from a mixture composition including an electrode active material and the binder. Specifically, the three-dimensional fiber network structure may refer to various structures in which microfibers formed by the fiberization of the binder form a skeleton, thereby functioning as a support that enables the electrode mixture film to be a free-standing film. In this case, the electrode active material and, selectively, a conductive material may be accommodated in pores formed in the three-dimensional fiber network structure.

In the disclosure, an electrode mixture film, a method for manufacturing the same, an electrode including the same, and a secondary battery each include one or more of technical features and/or technical configurations to be described below, and the technical features and/or technical configurations may be combined in various ways.

## Electrode mixture film

An electrode mixture film according to the disclosure includes an electrode active material, and a binder having a three-dimensional fiber network structure, wherein the electrode mixture film has an average value of shear strength of 15 $N/mm^2$ or greater, a standard deviation of shear strength of 0.49 or less, and a ratio of shear strength in a TD direction to shear strength in an MD direction of 0.92 to 1.08.

The shear strength is measured by means of a surface and interfacial characteristics analysis system (SAICAS) at two or more points spaced apart at regular intervals with respect to a depth direction of the electrode mixture film. Specifically, using the interfacial characteristics analysis system (SAICAS), horizontal cutting is performed at each predetermined depth in the thickness direction while maintaining a blade at a predetermined angle from the surface of a sample and at a predetermined rate to measure horizontal force generated in each horizontal cutting process, and then a shear strength P may be calculated through Equation 1 below.

$$[\text{Equation 1}]$$

$$P = F_h / (w \times d_o)$$

In Equation 1 above, P is shear strength ($N/mm^2$), $F_h$ is an average value of measured horizontal force (N), w is the width of a blade (mm), and $d_0$ is the depth (mm) from a surface at which the horizontal force $F_h$ is measured. Here, the $F_h$ is the average value of horizontal force, which is an average value of horizontal force measured during cutting at a specific depth when horizontal cutting is performed, and does not mean an average value of horizontal force measured at various points.

The shear strength may mean an average value of the shear strength (P) at a specific depth derived as described above for each depth, for example, shear strength values calculated at two or more measurement points, and this average value may be calculated for the MD direction, the TD direction, and the entirety. In addition, the standard deviation of shear strength may be calculated from Equation 2 below for the shear strength calculated for each specific depth.

$$[\text{Equation 2}]$$

$$U_B = \sqrt{\frac{\sum_{i=1}^{n}(S_m - S_i)^2}{n}}$$

In Equation 2 above, $U_B$ is a standard deviation of shear strength, $S_i$ is shear strength calculated at an i-th measurement point from the surface of a sample, $S_m$ is an average value of shear strength calculated at each measurement point, and n is an integer of 2 or more, which may mean the number of measurements.

As the electrode mixture film goes through various processes including a mixing (mixing) process of forming a mixture composition, a kneading (kneading) process of kneading the mixture composition to form a mixed aggregate, a process of pulverizing the mixed aggregate, which is the form of an aggregate in which the mixed composition is kneaded, and a process of sheeting powder for an electrode in which the mixed aggregate is pulverized, the mechanical properties, appearance properties, and performance properties of an electrode are affected by various factors. Particularly, in the kneading process in which the binder is fiberized, the degree to which the binder is fiberized may vary even with a small change in process conditions, and the process of sheeting the powder for an electrode is a roll-to-roll process using a roll-pressing roll, so that the process difficulty is high, and since it is a process of preparing powder in the form of a sheet without a special solvent, there is a problem in that there is a significant difference in performance in terms of mechanical properties and appearance characteristics of a produced film.

Accordingly, in the disclosure, an average shear strength and a standard deviation of shear strength are measured for a powder-sheeting film before being laminated with a current collector to be an electrode mixture film, which may be inversely used to optimize a process, and due to the optimized process, a binder forms a three-dimensional fiber network with uniformity and structural stability within the electrode mixture film, resulting in providing an electrode mixture film with excellent mechanical properties and improved resistance properties.

*Shear strength*

According to an embodiment of the disclosure, the electrode mixture film is characterized by having an average value of shear strength of 15 N/mm$^2$ or greater, a ratio of shear strength in a TD direction to shear strength in an MD direction of 0.92 to 1.08, and a standard deviation of shear strength of 0.49 or less.

The uniform distribution of the binder and the formation of the structurally stable three-dimensional network structure may be greatly influenced by the degree to which the binder is fiberized in the kneading process, and the sheet-molding in a roll-pressing roll in which the powder is first sheeted. In addition, the three-dimensional network structure by the binder develops orientation in the MD (machine direction) direction by a roll-to-roll process during a manufacturing process, such as powder-sheeting and calendering processes, and the orientation may cause a texture to form in the electrode mixture film. This ultimately causes mechanical properties of the electrode mixture film to have deviations between the MD direction and the TD direction, making cracks to be easily generated in this area, and may cause resistance to increase by disconnecting contacts between an active material and a conductive material, between a conductive material and a conductive material, and between an active material and an active material.

In the disclosure, in order to solve the above-described problem, factors that may have the greatest influence during the kneading and sheet-molding processes are controlled to optimize the degree of fiberization of a binder, thereby making it possible to provide an electrode mixture film with a uniform and structurally stable three-dimensional fiber network structure, and the factors may be defined as the average value of shear strength, the ratio of shear strength between the MD direction and the TD direction, and the standard deviation of shear strength.

Specifically, the average value of shear strength may be 15 N/mm$^2$ to 30 N/mm$^2$, preferably 16 N/mm$^2$ or greater, 17 N/mm$^2$ or greater, or 18 N/mm$^2$ or greater, and also, may be 25 N/mm$^2$ or less, 23 N/mm$^2$ or less, or 20 N/mm$^2$ or less. In general, if a binder is uniformly distributed, but is not structurally stable, mechanical strength is low, and if particularly lower than 15 N/mm$^2$, it may become a factor to weaken the durability of a secondary battery, and there may be a problem in that an electrode is damaged or cracked even with a small external impact. Accordingly, the higher the mechanical strength, the more preferable it is, but if the mechanical strength is too high, there may be a disadvantage in that flexibility becomes poor in return for benefits, and there may be a sharp increase in process costs, thereby worsening price competitiveness, so that it is necessary to control the mechanical strength at an adequate level.

The ratio of shear strength in the TD direction to shear strength in the MD direction may be 0.92 to 1.08. An electrode manufactured in a dry manner as described above, particularly an electrode with a three-dimensional fiber network structure of a binder due to fiberization of the binder inevitably has a texture, which leads to a difference in strength for each direction, and a value of strength in the MD direction is typically smaller than a value of strength in the TD direction. However, by controlling a kneading process and a sheet-molding process during a manufacturing process, an electrode mixture film in which the above-described difference in strength for each direction is minimized may be implemented, and an average shear strength of the electrode mixture film thus manufactured may be adjusted such that a ratio of strength in a TD direction to strength in an MD direction may fall within the above-described range.

When the above-described range is satisfied, a texture formed in the electrode mixture film may be minimized, thereby reducing the possibility of crack generation, and improvement in resistance properties may also be achieved. Therefore, more preferably, the ratio of strength may be 0.93 or greater, 0.94 or greater, 0.95 or greater, 0.96 or greater, or 0.97 or greater, and also, may be 1.07 or less, 1.06 or less, 1.05 or less, 1.04 or less, or 1.03 or less.

In addition, according to an embodiment of the disclosure, the electrode mixture film may have a standard deviation of shear strength of 0.49 or less, preferably 0.47 or less, and more preferably 0.46 or less, 0.45 or less, 0.44 or less, or 0.43 or less. The standard deviation of shear strength ultimately means how uniformly a binder is distributed, but does not simply mean that the distribution itself is uniform, and it may mean that a binder is uniformly distributed with structural stability.

For example, as a method for confirming the uniform distribution of a binder, scanning electron microscope-energy dispersive X-ray spectroscopy (SEM-EDX), X-ray photoelectron spectroscopy (XPS), or the like may be a method capable of confirming a deviation by measuring the contents of components at a specific position, but is a method that may not guarantee that a three-dimensional fiber network structure is firmly formed in a state in which a specific texture is suppressed at the corresponding position. However, as described above, the fact that the shear strength is equal to or greater than a specific value, while the ratio of strength for each direction is within a specific range, and the standard deviation is equal to or less than a specific value indicates that it requires an equivalent level of cutting force at all depths throughout the thickness direction of an electrode, so that it may mean that structural firmness, absence of directional non-uniformity, and uniform distribution throughout the film are simultaneously secured.

As described above, when the binder is fiberized to form a three-dimensional fiber network structure with uniformity and structural stability within the electrode mixture film, mechanical properties of an electrode itself are excellent, so that the durability of a cell may be improved. In addition, the matrix with structural stability may minimize the porosity of the electrode and has the advantage of being excellent in loading and thickness uniformity, it is also possible to expect improvements in energy density and appearance characteristics. Furthermore, a well-formed binder matrix may also affect the wettability of an electrolyte solution, and may improve resistance properties due to minimized aggregation regions, and it is also possible to expect uniform dispersion of an active material and a conductive material.

The electrode mixture film according to an embodiment of the disclosure includes an electrode active material, and a binder having a three-dimensional fiber network structure, and may optionally further include a conductive material.

*Electrode active material*

According to an embodiment of the disclosure, the electrode active material is not particularly limited as long as it is a commonly used electrode active material, and for example, the electrode active material may be a positive electrode active material or a negative electrode active material, and may preferably be a positive electrode active material.

The positive electrode active material is a compound capable of reversible intercalation and deintercalation of lithium, and may include a lithium transition metal compound which contains one or more selected from the group consisting of nickel (Ni), cobalt (Co), manganese (Mn), and iron (Fe).

Specifically, the positive electrode active material may include a lithium metal oxide including one or more metals such as cobalt, manganese, nickel, or aluminum, and lithium. More specifically, the lithium metal oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-Y}Mn_YO_2$ (wherein $0<Y<1$), $LiMn_{2-z}Ni_zO_4$ (wherein $0<Z<2$), etc.), a lithium-nickel-cobalt-based oxide (e.g., $LiNi_{1-Y1}Co_{Y1}O_2$ (wherein $0<Y1<1$), etc.), a lithium-manganese-cobalt-based oxide (e.g., $LiCo_{1-Y2}Mn_{Y2}O_2$ (wherein $0<Y2<1$), $LiMn_{2-Z1}Co_{Z1}O_4$ (wherein $0<Z1<2$), etc.), a lithium-nickel-manganese-cobalt-based oxide (e.g., $Li(Ni_pCo_qMn_r)O_2$ (wherein $0<p<1$, $0<q<1$, $0<r<1$, and $p+q+r=1$) or $Li(Ni_{p1}Co_{q1}Mn_{r1})O_4$ (wherein $0<p1<2$, $0<q1<2$, $0<r1<2$, and $p1+q1+r1=2$), etc.), or a lithium-nickel-cobalt-transition metal (M) oxide (e.g., $Li(Ni_{p2}Co_{q2}Mn_{r2}M_{s2})O_2$ (wherein M is selected from the group consisting of Al, Fe, V, Cr, Ti, Ta, Mg, and Mo, and p2, q2, r2, and s2 are each an atomic fraction of stand-alone elements, wherein $0<p2<1$, $0<q2<1$, $0<r2<1$, $0<s2<1$, and $p2+q2+r2+s2=1$), etc.), a lithium iron phosphate (e.g., $Li_{1+a}Fe_{1-x}M_x(PO_{4-b})X_e$ (wherein M is one or more selected from Al, Mg, and Ti, X is one or more selected from F, S, and N, and $-0.5 \leq a \leq 0.5$, $0 \leq x \leq 0.5$, and $0 \leq b \leq 0.1$), or the like, and any one thereof or a compound of two or more thereof may be included.

Among these, in terms of being able to increase the capacity properties and stability of a battery, the lithium metal oxide may be $LiCoO_2$, $LiMnO_2$, $LiNiO_2$, a lithium nickel manganese cobalt oxide (e.g., $Li(Ni_{1/3}Mn_{1/3}Co_{1,3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, etc.), a lithium nickel cobalt aluminum oxide (e.g., $Li(Ni_{0.8}Co_{0.15}Al_{0.05})_2$, etc.), a lithium nickel manganese cobalt aluminum oxide (e.g., $Li(Ni_{0.86}Co_{0.05}Mn_{0.07}Al_{0.02})O_2$), a lithium iron phosphate (e.g., $LiFePO_4$), or the like, and any one thereof or a mixture of two or more thereof may be used.

Meanwhile, the electrode active material may include a negative electrode active material, and the negative electrode active material may be a material capable of reversibly intercalating/de-intercalating lithium ions, and for example, may include at least one selected from the group consisting of a lithium metal, a carbon-based active material, a semi-metal-based active material including Si or Sn, a metal-based active material including a metal or an alloy of the metal and lithium, a metal composite oxide, and a transition metal oxide.

As the carbon-based material, a carbon-based active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous (or low-crystalline) carbon may include soft carbon (low-temperature fired carbon) or hard carbon, mezophase pitch carbides, fired cokes, and the like.

The semi-metal-based active material may be a silicon-based active material and/or a tin-based active material, and the silicon-based active material may be selected from the group consisting of Si, $SiO_x$ ($0<x\leq2$), and an Si-Y alloy (wherein Y is an element selected from the group consisting of an alkali metal, an alkaline earth metal, a Group 13 element, a Group 14 element, a transition metal, a rare earth element, and a combination thereof, but not Si). In addition, the tin-based active material may be Sn, $SnO_2$, Sn-Y (wherein Y is an element selected from the group consisting of an alkali metal, an alkaline earth metal, a Group 13 element, a Group 14 element, a transition metal, a rare earth element, and a combination thereof, but not Sn), or the like, and also, at least one thereof may be mixed with $SiO_2$ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

As the metal-based active material, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of one of the metals and lithium may be used.

As the metal composite oxide, one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \leq x \leq 1$), $Li_xWO_2$($0 \leq x \leq 1$), and $Sn_xMe_{1-x}Me'_yO_2$ (Me: Mn, Fe, Pb, Ge; Me': Al, B, P, Si, elements in Group 1, Group 2, and Group 3 of the periodic table, halogen; $0 < x \leq 1$; $1 \leq y \leq 3$; $1 \leq z \leq 8$) may be used.

The transition metal oxide may be a lithium-containing titanium composite oxide (LTO), a vanadium oxide, a lithium vanadium oxide, or the like.

Meanwhile, according to an embodiment of the disclosure, the electrode active material may be included in an amount of 80 wt% to 99 wt% based on the total weight of the electrode mixture film, and preferably, may be included in an amount of 85 wt% or greater, 88 wt% or greater, 90 wt% or greater, 92 wt% or greater, 93 wt% or greater, or 95 wt% or greater, and also, may be included in an amount of 98.5 wt% or less, 98 wt% or less, or 97.5 wt% or less. If included in the above-described range, it may be preferable both in terms of increasing the capacity and energy density of an electrode, and in terms of optimizing the function of a conductive material and a binder, which are auxiliary materials.

*Binder*

In an aspect, the binder performs a function of forming a three-dimensional fiber network structure such that the electrode mixture film may be free-standing, and the binder is not specified as a specific binder as long as it is fiberizable, that is, being capable of forming a three-dimensional fiber network structure in the electrode mixture film through fiberization and providing pores capable of accommodating the electrode active material, and selectively, the conductive material.

The fiberization of the binder refers to treatment of finely dividing a polymer applied as the binder into segments, and for example, may be performed by applying mechanical shear force, or the like, and as a result, the surface is loosened and fiberized, thereby forming a plurality of microfibers, through which a three-dimensional fiber network structure may be included.

Examples of the fiberizable binder may include one or more selected from the group consisting of polytetrafluoroethylene (PTFE), and polyolefin, and may preferably include polytetrafluoroethylene (PTFE), and may more preferably include polytetrafluoroethylene (PTFE) . Specifically, the polytetrafluoroethylene (PTFE) may be included in an amount of 60 wt% based on the total weight of the binder. In this case, the binder may further include one or more among polyethylene oxide (PEO), polyvinylidene fluoride (PVdF), polyvinylidene fluoride-cohexafluoropropylene (PVdF-HFP), and a polyolefin-based binder.

The fiberizable binder may be included in an amount of 0.1 wt% to 10.0 wt% based on the total weight of the electrode mixture film, and preferably, may be included in an amount of 0.2 wt% or greater, 0.3 wt% or greater, 0.5 wt% or greater, 0.7 wt% or greater, or 1.0 wt% or greater, and also, may be included in an amount of 9.0 wt% or less, 8.0 wt% or less, 7.0 wt% or less, or 5.0 wt% or less. In the case of the fiberizable binder, if included in the above-described range, there may not be a problem in which the binder acts as a resistor, or a problem with the degree of fiberization which the binder is required to have to be manufactured in the form of a free-standing type sheet.

*Conductive material*

According to an embodiment of the disclosure, the electrode mixture film may further include a conductive material, and the conductive material is a component for further improving the conductivity of an electrode active material, and the conductive material is not particularly limited as long as it has conductivity without causing a chemical change in the battery, and for example, carbon black such as acetylene black, Ketjen black, channel black, furnace black, lamp black, or thermal black, graphite powder such as natural graphite with a highly developed crystal structure or artificial graphite, conductive fiber such as carbon fiber (e.g., carbon nanotube, carbon nanofiber, carbon fiber) or metallic fiber, fluorocarbon powder, metallic powder such as aluminum powder or nickel powder, conductive whisker such as zinc oxide or potassium titanate, a conductive metal oxide such as titanium oxide, a conductive material such as a polyphenylene derivative, or the like may be used. Specifically, for uniform mixing and improvement in conductivity of the conductive material, one or more selected from the group consisting of graphite powder, carbon black, and carbon nanotube may be included.

The conductive material may be included in an amount of 0.1 wt% to 10.0 wt% based on the total weight of the electrode mixture film. Preferably, the conductive material may be included in an amount of 0.2 wt% or greater, 0.3 wt% or greater, 0.5 wt% or greater, or 0.7 wt% or greater, and also, may be included in an amount of 8.0 wt% or less, 6.0 wt% or less, or 5.0 wt% or less. The larger the amount of the conductive material to be input, the more advantageous it is for forming a conductive path, but the capacity may be degraded due to a relative decrease in the amount of the active material, and although it is not easy to control the input amount due to a dispersion problem, it is possible to maximize the effect of forming a conductive path by optimizing the dispersibility in the above-described range, so that it may be preferable that the conductive material is applied in the aforementioned range.

Meanwhile, in the disclosure, the electrode mixture film may have a porosity of 17 vol% to 30 vol%, preferably 19 vol% or greater, or 20 vol% or greater, and also, may have a porosity of 29 vol% or less, 28 vol% or less, 27 vol% or less, or 26 vol% or less. If the above-described range is satisfied, electrolyte solution impregnation is excellent, which may improve lifespan properties and output properties, and energy density may be excellent.

The porosity may be calculated by Equation A below.

Porosity (vol%) = (1-(electrode density/true density)} X 100                                    [Equation A]

In Equation A above, the true density is the density of an electrode mixture film measured by collecting the electrode mixture film to a certain size and then pressing the same with press equipment until the thickness of the film does not change, and the electrode density is the density of an electrode mixture film measured by collecting the film to a certain size.

## Method for manufacturing electrode mixture film

A method for manufacturing an electrode mixture film according to the disclosure includes (S1) forming a mixture composition by mixing an electrode active material and a binder, (S2) forming a mixed aggregate by kneading the mixture composition while applying shear force thereto for N minutes, (S3) preparing powder for an electrode by pulverizing the mixed aggregate, and (S4) in a roll-to-roll process in which the powder for an electrode is introduced at a roll temperature of T °C, manufacturing a mixture film by sheeting the powder for an electrode, wherein the product of N and T is 1700 min-°C to 2500 min·°C.

Since descriptions of the electrode active material and the binder, particularly the binder capable of forming a three-dimensional network structure, and a conductive material which may optionally be further included are the same as those described above, detailed descriptions thereof will be omitted, and each step of the manufacturing process will be described below.

### Step S1

According to an embodiment of the disclosure, in the method for manufacturing an electrode mixture film, the S1 step is a step of mixing an electrode active material and a binder to obtain a mixture composition. In this case, the above-described mixing is performed such that the electrode active material and the binder are uniformly distributed, and since the electrode active material and the binder are mixed into a powder phase, various methods may be used without limitation as long as the methods may simply mix the electrode active material and the binder. In addition, the conductive material may optionally be further included. However, since the electrode mixture film according to an embodiment of the disclosure is manufactured as a dry electrode without using a solvent, so that the mixing may be performed by dry mixing, and the above-described materials may be introduced into an apparatus such as a mixer or a blender to be mixed.

In this case, the mixing may be performed in a mixer at 3,000 rpm to 20,000 rpm for 5 minutes to 60 minutes, and preferably, may be performed at 5,000 rpm to 15,000 rpm for 10 minutes to 30 minutes. If performed in the above-described range, the above-described materials may be uniformly mixed, which may improve the performance of a battery. More specifically, the mixing rate may be 5,500 rpm or greater, 6,000 rpm or greater, or 6,500 rpm or greater, and also, may be 14,000 rpm or less, 13,000 rpm or less, or 12,000 rpm or less.

The above-described control conditions of the mixing process may determine how uniformly and well the binder is fiberized in the kneading process of the subsequent step S2, and if the mixing is not uniformly achieved, even if the fiberization is uniformly achieved, there may be portions that are not uniform in the whole film, so that it may be desirable that the mixing process is performed under the above-described conditions.

### Step S2

According to an embodiment of the disclosure, in the method for manufacturing an electrode mixture film, the step S2 includes applying shear force for N minutes to the mixture composition obtained in the mixing of the step S1, thereby forming a mixed aggregate. That is, the step S2 may be a binder fiberization process using a binder capable of forming a matrix.

The fiberization process may be performed, for example, through mechanical milling or kneading (kneading), and although the fiberization process is not particular limited as long as it is one commonly performed, the fiberization process may be preferably performed by high temperature-low shear kneading (kneading), and may be performed, for example, through a kneader such as a kneader such as a twin-screw extruder. The fiberizable binder is fiberized by the above-described kneading, thereby bonding or connecting the electrode active material and the conductive material powder to each other to form a mixed aggregate with a solid content of 100%.

The kneading may be performed at a rate of 10 rpm to 100 rpm, and preferably, may be performed at a rate of 20 rpm to 70 rpm. In addition, the kneading time N may be 10 minutes to 30 minutes, and preferably, may be 15 minutes to 25 minutes. When the above-described range is satisfied, fiberization may proceed adequately, and a matrix uniformly fiberized overall as well as structurally stable may be formed, and the formation of such a stable matrix may greatly contribute to achieving the shear strength of the electrode mixture film.

Furthermore, the content of the mixture composition introduced during the kneading may also be controlled. For example, the mixture composition discharged from the mixing process may be introduced in an amount of 50 parts by volume to 150 parts by volume, preferably 60 parts by volume to 140 parts by volume, 70 parts by volume to 130 parts by volume, or 80 parts by volume to 120 parts by volume, with respect to the internal volume of a kneading apparatus such as a kneader. By controlling the amount of the mixture composition introduced in the kneading as described above, the fiberization of the binder may be controlled, which may be simultaneously adjusted together with conditions of the kneading process to control the degree to which the binder matrix structure formed in accordance with the degree of fiberization of the binder affects a contact area between active materials, and to control the degree of aggregation of the binder.

In addition, the kneading may be performed under the conditions of a high temperature and a pressure higher than normal pressure, and specifically, may be performed under the condition of a pressure higher than normal pressure.

More specifically, the kneading may be performed at a temperature of 50 °C to 230 °C, preferably 90 °C to 200 °C. If the kneading is performed at a high temperature in the above-described range, the fiberization of the binder and agglomeration by the kneading may be easily achieved, and it is possible to appropriately prevent a problem of disconnection of the fiberized binder.

In addition, the kneading may be performed at a pressure equal to or higher than normal pressure, specifically, 1 atm to 3 atm, and more specifically 1.1 atm to 3 atm. If the kneading is performed in the above-described range, it is possible to adequately prevent the problem of the disconnection of the fiberized binder, and to prevent a problem in which the density of the aggregate becomes too high.

That is, according to the disclosure, when the high-temperature and low-shear kneading process is performed under the conditions of a high temperature and a pressure equal to or higher than normal pressure instead of performing high-shear kneading, it is possible to achieve intended effects of the disclosure.

### Step S3

According to an embodiment of the disclosure, in the method for manufacturing an electrode mixture film, the S3 step includes pulverizing a mixed aggregate prepared through a kneading process, thereby obtaining powder for an electrode.

The mixed aggregate prepared through the above-described kneading process may be directly pressed and molded into a sheet phase (sheeting, e.g., calendering process), but in this case, the aggregate needs to be pressed with a strong pressure and at a high temperature to be manufactured into a film form, and accordingly, there may be a problem in that the density of the film becomes too high or a uniform film may not be obtained. Therefore, the mixed aggregate prepared as described above is pulverized to prepare powder-phase powder for an electrode.

An apparatus used in the above-described pulverizing is not particularly limited, but an apparatus such as a blender or a grinder may be preferably used.

The pulverizing may be performed at a rate of 1,000 rpm to 15,000 rpm for 5 seconds to 30 minutes, preferably at a rate of 3,000 rpm to 8,000 rpm for 30 seconds to 15 minutes. If the pulverizing is performed in the above-described range, the pulverizing is sufficiently achieved, thereby preparing powder of an adequate size to be made into a film, and fine powder may not be generated in a large amount from the aggregate.

The above-described pulverizing process functions to help a free-standing film be properly formed in the subsequent sheet forming process, and at the same time, may affect all factors that affect CPCI, depending on the degree thereof. Therefore, it may be preferable to control the process to satisfy the above-described conditions.

The average particle diameter of the powder for an electrode may be 10 $\mu$m to 3,000 $\mu$m, specifically 50 $\mu$m to 1,500 $\mu$m, and more specifically 100 $\mu$m to 700 $\mu$m. If the above-described range is satisfied, it is possible to form an electrode mixture film having a thickness and a density which are uniform, and it is possible to secure excellent physical properties of the electrode mixture film.

Meanwhile, the powder for an electrode according to the disclosure may further include, although not essential, fillers to suppress expansion of the electrode. The filler is not particularly limited as long as it is a fibrous material without causing a chemical change in a battery, but may be, for example, at least one selected from an olefin-based polymer such as polyethylene and polypropylene, and a fibrous material such as glass fiber and carbon fiber.

*Step S4*

According to an embodiment of the disclosure, in the method for manufacturing an electrode mixture film, the S4 step includes thermocompressing the powder for an electrode.

The S4 step may be a process of thermocompressing the powder for an electrode obtained as described above with a roll-pressing roll in a roll-to-roll process (calendering process, sheeting process) including two or more pairs of roll-pressing rolls, thereby manufacturing a free-standing electrode mixture film in a sheet form.

The roll-to-roll process (calendar process) may include a roll-press part, and in the roll-press part, roll-pressing rolls may be disposed in pairs while facing each other, or 3 or more rolls may be disposed in contact with each other, wherein the roll-pressing rolls may be continuously disposed in plurality in the roll-press part. If the roll-pressing rolls are continuously disposed in plurality, the temperature and peripheral speed ratio of each roll (rotational speed ratio of a pair of rolls) may be the same or different.

According to an embodiment of the disclosure, the S4 step may include (S4a) obtaining a powder-sheeting film by pre-sheeting the powder for an electrode, and (S4b) manufacturing a mixture film by sheeting the powder-sheeting film two or more times. That is, the shape of the powder may be converted into a sheet in the S4a step, and then the sheet may be roll-pressed through the step S4b to improve the strength and satisfy the porosity and loading amount required for an electrode.

Particularly, as a temperature T of a roll-pressing roll into which the powder for an electrode is first introduced, the temperature of a roll-pressing roll in which a powder-sheeting film is manufactured in the S4a step may be important, and at this time, the temperature of the roll-pressing roll may be 60 °C to 110 °C, preferably 70 °C to 100 °C, and if the above-described range is satisfied, the powder for an electrode including the binder fiberized during the kneading is molded into a sheet, thereby more organically connect power to powder, and accordingly, the overall binder matrix structure may be formed firmly and uniformly.

The rotational speed ratio of roll-pressing rolls provided in the roll-to-roll process of the S4 step may be each independently adjusted adequately in the range of 1:1 to 1:10. In addition, in order to adjust the manufactured electrode mixture film to an adequate thickness, the electrode mixture film may be introduced into the roll-press part again and be thermally compressed 1 time to 10 times.

*Kneading time (N) and temperature (T) of roll into which powder for electrode is introduced*

According to an embodiment of the disclosure, the product of the kneading time N in the S2 step and the temperature T of the roll into which the powder for an electrode is introduced in the S4 step may be 1700 min·°C to 2500 min·°C.

As described above, in order to manufacture the electrode mixture film according to an embodiment of the disclosure, the controlling in the S2 and S4 steps may be more important, and it may be necessary to control the kneading time and the temperature of the roll at the same time. For example, if the kneading time is short, it may be necessary to at least increase the temperature of the roll to help the structure formation of a binder matrix, and if the kneading time is long, thereby excessively fiberizing a binder, it may be necessary to lower the temperature of the roll to control such that further fiberization does not occur. Accordingly, the product of N and T may be 1700 min·°C or greater, 1750 min·°C or greater, or 1800 min·°C or greater, and also, may be 2500 min·°C or less, 2450 min·°C or less, or 2400 min·°C or less. If the kneading time and the roll temperature are not controlled, so that the product of N and T becomes less than 1700 min·°C, even when the binder is uniformly distributed without being aggregated, the overall loading uniformity or thickness uniformity of a powder-sheeting film are degraded, which may allow the appearance characteristics of an electrode to be poor and cracks to be easily generated. In addition, if greater than 2500 min·°C, the fiberization may excessively proceed or the power is overheated during the powder sheeting, thereby subjecting the surface portion of a powder-sheeting film to intensive shear force, which may cause a problem in that there is a large difference in the degree of fiberization between the inside and the outside of the binder.

*Average shear strength and standard deviation of shear strength of powder-sheeting film*

According to an embodiment of the disclosure, the powder-sheeting film may have an average shear strength of 2.5 N/mm² or greater, and a standard deviation of shear strength of 0.54 or less. Preferably, the powder-sheeting film may have an average shear strength of 2.5 N/mm² to 5.0 N/mm², and a standard deviation of shear strength of 0.20 to 0.54. More preferably, the average shear strength of the powder-sheeting film may be 2.6 N/mm² or greater, 2.7 N/mm² or greater, 2.8 N/mm² or greater, or 2.9 N/mm² or greater, and also, may be 4.5 N/mm² or less, 4.0 N/mm² or less, or 3.5 N/mm² or less. In addition, the standard deviation of shear strength may be 0.53 or less, 0.50 or less, 0.48 or less, 0.45 or less, or 0.43 or less.

The average shear strength and the standard deviation of shear strength of the powder-sheeting film may be used as indexes to finely control process conditions for the formation of a uniform and stable structure of a binder matrix in order to achieve the effect of improving mechanical properties and resistance properties of an electrode mixture film. In addition, the process conditions which are controlled such that the average shear strength and the standard deviation of shear strength satisfy the above-described ranges may ensure that the average shear strength and the standard deviation of shear strength of an electrode mixture film may satisfy the ranges defined in the disclosure. In addition, the average shear strength and the standard deviation of shear strength of the powder-sheeting film may be measured in the same manner as those of the electrode mixture film described above.

**Electrode**

An electrode according to an embodiment of the disclosure includes the above-described electrode mixture film according to an embodiment of the disclosure. In detail, the electrode may include a current collector, and the electrode mixture film of the disclosure formed on the current collector, and may be a dry electrode.

In addition, the electrode according to the disclosure may be manufactured by stacking the electrode mixture film on one side or both sides of the current collector and laminating the resulting product.

The lamination may be a step of roll-pressing, thereby attaching the electrode mixture film onto the current collector. The lamination may be performed by a roll press method using a lamination roller, and at this time, the lamination roller may be maintained at a temperature of 20 °C to 200 °C.

If the electrode is a positive electrode, the current collector may be any one having conductivity without causing a chemical change in the corresponding battery, and is not particularly limited. For example, as the current collector, stainless steel, aluminum, nickel, titanium, fired carbon, or aluminum or stainless steel that is surface-treated with one of carbon, nickel, titanium, silver, and the like may be used.

If the electrode is a negative electrode, the current collector is not particularly limited as long as it has high conductivity without causing a change in the battery, and for example, copper, stainless steel, aluminum, nickel, titanium, fired carbon, copper or stainless steel that is surface-treated with one of carbon, nickel, titanium, silver, and the like, an aluminum-cadmium alloy, or the like may be used.

The thickness of the current collector may be 3 μm to 100 μm, preferably 8 μm to 80 μm, but is not limited thereto. In addition, microscopic irregularities may be formed on the surface of the current collector to improve adhesion of the mixture film.

The current collector may be entirely or partially coated with a conductive primer for lowering resistance and improving adhesion on the surface. Herein, the conductive primer may include a conductive material and a binder, wherein the conductive material is not limited as long as it is a material having conductivity, but may be, for example, a carbon-based material. The binder may include a fluorine-based binder (including PVDF and PVDF copolymer), an acrylic-based binder, and an aqueous binder, which may be dissolved in a solvent.

**Secondary battery**

A secondary battery according to the disclosure may include the above-described electrode, and the electrode includes a current collector and the above-described electrode mixture film disposed on the current collector. For example, the secondary battery may include a secondary battery including a liquid electrolyte and an all-solid-state battery including a solid electrolyte.

If the secondary battery according to an embodiment of the disclosure is the secondary battery including a liquid electrolyte, the secondary battery may include a separator between a plurality of electrodes. The separator is to separate the negative electrode and the positive electrode and to provide a movement path for lithium ions, and any separator may be used without particular limitation as long as it is a separator commonly used in a secondary battery, and particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

In addition, the electrolyte used in the disclosure may be an organic liquid electrolyte, an inorganic liquid electrolyte, a solid polymer electrolyte, a gel-type polymer electrolyte, a solid inorganic electrolyte, a molten-type inorganic electrolyte, or the like, all of which may be used in the manufacturing of a secondary battery, but is not limited thereto.

Specifically, the electrolyte may include an organic solvent and a lithium salt. As the organic solvent, any organic solvent may be used without particular limitation as long as it may serve as a medium through which ions involved in an electrochemical reaction of a battery may migrate. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it may provide lithium ions used in a secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 4.0 M, preferably 0.5 M to 3.0 M, and more preferably 1.0 M to 2.0 M. If the concentration of the lithium salt is included in the above-described range, the electrolyte has suitable conductivity and viscosity, and thus, may exhibit excellent electrolyte performance, and lithium ions may effectively migrate.

In order to improve lifespan properties of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. In this case, the additive may be included in an amount of 0.1 wt% to 10.0 wt% based on the total weight of the electrolyte.

In addition, the secondary battery according to the disclosure stably exhibits excellent discharge capacity, output properties, and capacity retention rate, and thus, is useful for portable devices such as mobile phones, laptop computers, and digital cameras, and in the field of electric vehicles such as hybrid electric vehicles (HEVs).

Accordingly, according to another embodiment of the disclosure, a battery box including the secondary battery as a unit cell may be provided. The battery box may include a plurality of battery cells, which are unit cells, and may include packaging which accommodates the plurality of battery cells. Here, the battery box may be, for example, a battery module or a battery pack.

The battery module or the battery pack may be included in an electrical device, and may be used as a power source for the electrical device. The electrical device may be, for example, one or more medium-and-large-sized devices such as a power tool, an electric car including an electric vehicle (EV), a hybrid electric vehicle (HEV), and a plug-in hybrid electric vehicle (PHEV), or a power storage system.

**Examples**

Hereinafter, examples of the disclosure will be described in detail so that those skilled in the art may easily carry out the present invention. However, the present invention may be embodied in many different forms, and is not limited to the examples set forth herein.

**Example 1**

96 g of $LiNi_{0.8}Co_{0.05}Mn_{0.12}Al_{0.02}O_2$ as a positive electrode active material, 1.8 g of carbon black as a conductive material, and 2.2 g of polytetrafluoroethylene (PTFE) as a fiberizable binder were mixed to prepare a mixture composition, and then the mixture composition was introduced into a kneader and kneaded for 21 minutes at an atmospheric pressure of 1.1, a temperature of 150 °C, and a rotation rate of 40 rpm to prepare an aggregate, and the aggregate was pulverized to prepare powder for an electrode.

Thereafter, the temperature of a roll into which the powder for an electrode was to be introduced in the above roll-to-roll process was set to 100 °C to powder-sheet the powder for an electrode, thereby manufacturing a powder-sheeting film (thickness of 500 $\mu$m), and after being subjected to sheeting 2 times, the powder-sheeting film was laminated with an aluminum foil to manufacture a dry electrode (thickness of 110 $\mu$m) in which an electrode mixture film was disposed on an aluminum current collector.

**Example 2**

A dry electrode was manufactured in the same manner as in Example 1, except that the mixture composition was introduced into a kneader and kneaded for 21 minutes at an atmospheric pressure of 1.1, a temperature of 150 °C, and a rotation rate of 40 rpm to prepare an aggregate, and the temperature of a roll into which powder for an electrode was to be introduced in the above roll-to-roll process was set to 90 °C to powder-sheet the powder for an electrode, thereby manufacturing a powder-sheeting film.

**Example 3**

A dry electrode was manufactured in the same manner as in Example 1, except that the mixture composition was introduced into a kneader and kneaded for 25 minutes at an atmospheric pressure of 1.1, a temperature of 150 °C, and a rotation rate of 40 rpm to prepare an aggregate, and the temperature of a roll into which powder for an electrode was to be introduced in the above roll-to-roll process was set to 70 °C to powder-sheet the powder for an electrode, thereby manufacturing a powder-sheeting film.

**Example 4**

A dry electrode was manufactured in the same manner as in Example 1, except that the mixture composition was introduced into a kneader and kneaded for 25 minutes at an atmospheric pressure of 1.1, a temperature of 150 °C, and a rotation rate of 40 rpm to prepare an aggregate, and the temperature of a roll into which powder for an electrode was to be introduced in the above roll-to-roll process was set to 90 °C to powder-sheet the powder for an electrode, thereby manufacturing a powder-sheeting film.

**Comparative Example 1**

A dry electrode was manufactured in the same manner as in Example 1, except that the mixture composition was introduced into a kneader and kneaded for 21 minutes at an atmospheric pressure of 1.1, a temperature of 150 °C, and a rotation rate of 40 rpm to prepare an aggregate, and the temperature of a roll into which powder for an electrode was to be introduced in the above roll-to-roll process was set to 70 °C to powder-sheet the powder for an electrode, thereby manufacturing a powder-sheeting film.

**Comparative Example 2**

A dry electrode was manufactured in the same manner as in Example 1, except that the mixture composition was introduced into a kneader and kneaded for 13 minutes at an atmospheric pressure of 1.1, a temperature of 150 °C, and a rotation rate of 40 rpm to prepare an aggregate, and the temperature of a roll into which powder for an electrode was to be introduced in the above roll-to-roll process was set to 100 °C to powder-sheet the powder for an electrode, thereby manufacturing a powder-sheeting film.

**Comparative Example 3**

A dry electrode was manufactured in the same manner as in Example 1, except that the mixture composition was introduced into a kneader and kneaded for 21 minutes at an atmospheric pressure of 1.1, a temperature of 150 °C, and a rotation rate of 40 rpm to prepare an aggregate, and the temperature of a roll into which powder for an electrode was to be introduced in the above roll-to-roll process was set to 60 °C to powder-sheet the powder for an electrode, thereby manufacturing a powder-sheeting film.

**Comparative Example 4**

A dry electrode was manufactured in the same manner as in Example 1, except that the mixture composition was introduced into a kneader and kneaded for 30 minutes at an atmospheric pressure of 1.1, a temperature of 150 °C, and a rotation rate of 40 rpm to prepare an aggregate, and the temperature of a roll into which powder for an electrode was to be introduced in the above roll-to-roll process was set to 90 °C to powder-sheet the powder for an electrode, thereby manufacturing a powder-sheeting film.

**Comparative Example 5**

A dry electrode was manufactured in the same manner as in Example 1, except that the mixture composition was introduced into a kneader and kneaded for 25 minutes at an atmospheric pressure of 1.1, a temperature of 150 °C, and a rotation rate of 50 rpm to prepare an aggregate, and the temperature of a roll into which powder for an electrode was to be introduced in the above roll-to-roll process was set to 110 °C to powder-sheet the powder for an electrode, thereby manufacturing a powder-sheeting film.

**Comparative Example 6**

96 g of $LiNi_{0.81}Co_{0.05}Mn_{0.12}Al_{0.02}O_2$ as a positive electrode active material, 1.8 g of carbon black as a conductive material, and 2.2 g of polyvinylidene fluoride (PVDF) were mixed in an N-methylpyrrolidone (NMP) solvent to prepare a positive electrode slurry, and the positive electrode slurry was applied on one side of an aluminum current collector, dried at 130 °C, and roll-pressed at a pressure of spinning of 3,000 kgf/cm, thereby manufacturing a positive electrode in a wet manner.

**Experimental Example 1: Measurement of physical properties of powder-sheeting film**

A TD direction value, an MD direction value, an average value, and a standard deviation of shear strength of the powder-sheeting film formed during the manufacturing process of each of Examples and Comparative Examples were measured by the following methods.

1) Shear strength (N/mm$^2$) measurement) generated in each horizontal cutting process, and then a shear strength P was calculated through Equation 1 below, and an average for each direction and an overall average were obtained for the shear strength values calculated for each direction and for each depth.

[Equation 1]

$$P = F_h / (w \times d_o)$$

In Equation 1 above, P is shear strength (N/mm$^2$), $F_h$ is an average value of measured horizontal force (N), w is the width of a blade (mm), and $d_0$ is the depth (mm) from a surface at which the horizontal force $F_h$ is measured.
2) Standard deviation of shear strength: For the shear strength calculated for each specific depth by the method in 1) above, a standard deviation was obtained through Equation 2 below.

[Equation 2]

$$U_B = \sqrt{\frac{\sum_{i=1}^{n}(S_m - S_i)^2}{n}}$$

In Equation 2 above, $U_B$ is a standard deviation of shear strength, $S_i$ is shear strength calculated at an i-th measurement point from the surface of a sample, $S_m$ is an average value (the average shear strength calculated in Equation 1 above) of shear strength calculated at each measurement point, and n is an integer of 2 or more (here, the n is 6).

[Table 1]

| | Kneading time (N) (min) | Roll temperature (T) (°C) | N x T (min·°C) | Shear strength (N/mm$^2$) | Shear strength standard deviation |
|---|---|---|---|---|---|
| Example 1 | 21 | 100 | 2100 | 3.00 | 0.410 |
| Example 2 | 21 | 90 | 1890 | 2.90 | 0.385 |
| Example 3 | 25 | 70 | 1750 | 3.30 | 0.262 |
| Example 4 | 25 | 100 | 2500 | 3.50 | 0.412 |
| Comparative Example 1 | 21 | 70 | 1470 | 2.20 | 0.310 |
| Comparative Example 2 | 13 | 100 | 1300 | 2.30 | 0.390 |
| Comparative Example 3 | 21 | 60 | 1260 | 2.15 | 0.280 |
| Comparative Example 4 | 30 | 90 | 2700 | 2.85 | 0.550 |
| Comparative Example 5 | 25 | 110 | 2750 | 3.10 | 0.580 |

Referring to Table 1 above, in the case of Comparative Examples which do not satisfy relationship between the kneading time and the roll temperature in the manufacturing process of a powder-sheeting film, it may be seen that the shear strength was lower or the standard deviation was larger than that of Examples. Particularly, in the case of Comparative Examples 1 to 3, the N x T value is small, so that it may be confirmed that the standard deviation is at an adequate level, but the shear strength is at least 20% lower than that of Examples, and in the case of Comparative Examples 4 and 5, the N x T value is excessively high, so that it may be confirmed that the standard deviation is large, resulting in poor uniformity between the inside and the outside of the powder-sheeting film.

**Experimental Example** 2: **Evaluation of electrode mixture film**

A TD direction value, an MD direction value, an average value, and a standard deviation of shear strength of the electrode mixture film in the dry electrode manufactured in each of Examples and Comparative Examples were measured by the following methods.

1) Shear strength (N/mm$^2$)

[Equation 1]

$$P = F_h / (w \times d_o)$$

In Equation 1 above, P is shear strength (N/mm$^2$), $F_h$ is an average value of measured horizontal force (N), w is the width of a blade (mm), and $d_0$ is the depth (mm) from a surface at which the horizontal force $F_h$ is measured.
2) Shear strength standard deviation: For the shear strength calculated for each specific depth by the method in 1) above, a standard deviation was obtained through Equation 2 below.

[Equation 2]

$$U_B = \sqrt{\frac{\sum_{i=1}^{n}(S_m - S_i)^2}{n}}$$

In Equation 2 above, $U_B$ is a standard deviation of shear strength, $S_i$ is shear strength calculated at an i-th measurement point from the surface of a sample, $S_m$ is an average value (the value calculated in Equation 1 above) of shear strength calculated at each measurement point, and n is an integer of 2 or more (here, the n is 6).

[Table 2]

| | Shear strength average value (N/mm$^2$) | TD direction shear strength (N/mm$^2$) | MD direction shear strength (N/mm$^2$) | MD/TD | Shear strength standard deviation |
|---|---|---|---|---|---|
| Example 1 | 18.2 | 18.2 | 18.3 | 0.99 | 0.424 |
| Example 2 | 18.3 | 18.1 | 18.4 | 0.98 | 0.415 |
| Example 3 | 18.5 | 18.5 | 18.3 | 1.01 | 0.405 |
| Example 4 | 19.1 | 18.9 | 19.2 | 0.98 | 0.419 |
| Comparative Example 1 | 17.5 | 19.1 | 16.5 | 1.16 | 0.580 |
| Comparative Example 2 | 17.8 | 18.6 | 17 | 1.09 | 0.525 |
| Comparative Example 3 | 18.0 | 20.1 | 17.2 | 1.17 | 0.515 |
| Comparative Example 4 | 18.3 | 19.5 | 17.8 | 1.10 | 0.495 |
| Comparative Example 5 | 18.5 | 19.5 | 16.8 | 1.16 | 0.510 |
| Comparative Example 6 | 39.9 | - | - | - | 1.465 |

Referring to Table 2 above, the electrode mixture films of the dry electrodes of Examples 1 to 4 have excellent shear strength and also a low standard deviation compared to the electrode mixture films of Comparative Examples 1 to 5, so that it may be confirmed that the films with high strength as well as uniformity were manufactured. Particularly, the results show that Comparative Examples 1 to 3 have a standard deviation similar to that of Examples in the powder-sheeting films, but have further degraded uniformity in the final electrode composite films, and although Comparative Examples 4 and 5 are not advantageous in terms of strength compared to Examples, the standard deviation was high, so that it may be confirmed that electrode mixture films having poor uniformity were manufactured.

In addition, compared to Comparative Example 6, which is a wet electrode, the wet electrode has higher strength, but has a standard deviation which is three times higher, and considering process advantages of a dry electrode, it may be understood that the dry electrode shows excellent results compared to a typical wet electrode, since disadvantages due to the rate of defects caused by the high standard deviation may outweigh advantages which may be obtained from the high strength.

**Experimental Example 3: Evaluation of battery performance**

**1) Manufacturing of secondary battery:** Artificial graphite was used as a negative electrode active material. A negative electrode including a negative electrode active material layer which includes the negative electrode active material, CMC and SBR as negative electrode binders, and carbon black as a negative electrode conductive material at a weight ratio of 96.7:2.8:0.5 was prepared. The negative electrode active material layer had a weight loading amount of 277 mg/25cm$^2$, and a thickness was 67 μm, and a copper foil having a thickness of 10 μm was used as a negative electrode current collector.

The dry positive electrode of each of Examples and Comparative Examples, the above-described negative electrode, and a porous polyethylene separator were assembled using a winding method, and the assembled battery was injected with an electrolyte solution (ethylene carbonate (EC)/ethyl methyl carbonate (EMC)=3/7 (volume ratio)), and lithium hexafluorophosphate (1 mole of LiPF6) to manufacture a secondary battery.

The secondary battery was charged to 3.6 V at a 0.1 C Crate, and then discharged to 2.5 V to proceed with an activation process.

**2) Cell resistance (mΩ):** After the secondary battery was charged and discharged, the lithium secondary battery was fully charged and discharged again to measure the surface resistance (0.1 second resistance) by applying a 2.5 C pulse current thereto for a specific period of time according to a change in SOC.

**3) Resistance increase rate (%) and capacity retention rate** (%) The secondary battery was charged in a CCCV mode to 0.2 C and 3.6 V (end current 1/20 C), and then discharged to 2.5 V at a 0.2 C constant current to perform initial charge and discharge, which was set to one cycle, and then while performing 100 cycles of the charge and discharge, cell resistance (measured by the method of 2) above) and discharge capacity were measured to calculate a resistance increase rate and a capacity maintenance rate by the following equations.

Capacity retention rate (%) = (discharge capacity after 100 cycles)/(discharge capacity after 1 cycle) X 100 Resistance increase rate (%) = (100 cycle discharge resistance)/(1 cycle discharge resistance) X 100

[Table 3]

|  | Resistance increase rate (%) | Capacity retention rate (%) |
|---|---|---|
| Example 1 | 10.5 | 95.8 |
| Example 2 | 10.2 | 95.2 |
| Example 3 | 10.6 | 95.4 |
| Example 4 | 11.0 | 94.9 |
| Comparative Example 1 | 13.4 | 90.2 |
| Comparative Example 2 | 13.2 | 90.5 |
| Comparative Example 3 | 12.9 | 91.2 |
| Comparative Example 4 | 14.6 | 90.8 |
| Comparative Example 5 | 13.5 | 91.9 |
| Comparative Example 6 | 11.9 | 94.9 |

Referring to Table 3 above, it may be confirmed the dry electrodes of Examples 1 to 4 have a lower resistance increase rate and a higher capacity retention rate than the dry electrodes of Comparative Examples 1 to 5, and thus, have excellent cell performance. Consequently, the uniformity and strength of the electrode mixture film are directly connected to the durability, and the uniformity may also affect the acceleration of deterioration, so that if the uniformity decreases, thereby causing early deterioration in some localized portions, the deterioration may be accelerated at the corresponding portions, which may adversely affect the lifespan properties. This may be confirmed from the cell lifespan performance of Examples and Comparative Examples, which have no significant difference in the strength but have significant differences in the standard deviation.

In addition, through Comparative Example 6, the results may be confirmed in that the capacity retention rate was equal to or greater than that of the wet electrode, and the cell resistance was slightly increased compared to that of Examples, and from the results of Comparative Examples 1 to 5 having a large standard deviation, it may be inferred that the wet electrode of Comparative Example 6 having a standard deviation three times higher than that of Examples will also be subjected to the phenomenon in which deterioration is accelerated. In addition, considering the process advantages of the dry electrode, it may be understood that the dry electrode has advantages beyond expectations in that it is not only advantageous in unit cost competitiveness but also archives an equivalent or higher level of performance.

## Claims

1.  An electrode mixture film comprising an electrode active material, and a binder having a three-dimensional fiber network structure, wherein:

     the electrode mixture film has an average value of shear strength of 15 N/mm$^2$ or greater, a ratio of shear strength in a TD direction to shear strength in an MD direction of 0.92 to 1.08, and a standard deviation of shear strength of 0.49 or less; and
     the shear strength is measured by means of a surface and interfacial characteristics analysis system (SAICAS) at two or more points spaced apart at regular intervals with respect to a depth direction of the electrode mixture film.

2.  The electrode mixture film of claim 1, wherein the ratio of shear strength in the TD direction to shear strength in the MD direction is 0.95 to 1.05.

3.  The electrode mixture film of claim 1, wherein the shear strength has an average value of 15 N/mm$^2$ to 30 N/mm$^2$.

4.  The electrode mixture film of claim 1, wherein the standard deviation of shear strength is 0.45 or less.

5.  The electrode mixture film of claim 1, wherein the electrode active material comprises a lithium transition metal compound containing one or more selected from the group consisting of nickel (Ni), cobalt (Co), manganese (Mn), and iron (Fe).

6. The electrode mixture film of claim 1, wherein the binder comprises polytetrafluoroethylene (PTFE).

7. A method for manufacturing an electrode mixture film, the method comprising:

   (S1) forming a mixture composition by mixing an electrode active material and a binder;
   (S2) forming a mixed aggregate by kneading the mixture composition while applying shear force thereto for N minutes;
   (S3) preparing powder for an electrode by pulverizing the mixed aggregate; and
   (S4) in a roll-to-roll process in which the powder for an electrode is introduced at a roll temperature of T °C, manufacturing a mixture film by sheeting the powder for an electrode, wherein the product of N and T is 1700 min·°C to 2500 min·°C.

8. The method of claim 7, wherein the N is 15 minutes to 25 minutes.

9. The method of claim 7, wherein the T is 70 °C to 100 °C.

10. The method of claim 7, wherein the S4 step comprises: (S4a) obtaining a powder-sheeting film by pre-sheeting the powder for an electrode; and (S4b) manufacturing a mixture film by sheeting the powder-sheeting film two or more times.

11. The method of claim 10, wherein:

    the powder-sheeting film has an average value of shear strength of 2.5 N/mm$^2$ or greater, and a standard deviation of shear strength of 0.54 or less; and
    the shear strength is measured by means of a surface and interfacial characteristics analysis system (SAICAS) at two or more points spaced apart at regular intervals with respect to a depth direction of the electrode mixture film.

12. An electrode comprising a current collector, and the electrode mixture film of claim 1 disposed on the current collector.

13. The electrode of claim 13, wherein the electrode is a positive electrode.

14. A secondary battery comprising the electrode of claim 12.

## INTERNATIONAL SEARCH REPORT

| International application No. |
|---|
| **PCT/KR2025/004958** |

| A. | CLASSIFICATION OF SUBJECT MATTER |
|---|---|

**H01M 4/13**(2010.01)i; **H01M 4/04**(2006.01)i; **H01M 4/525**(2010.01)i; **H01M 4/62**(2006.01)i; **H01M 4/66**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/13(2010.01); B05D 3/12(2006.01); B05D 5/12(2006.01); H01M 10/052(2010.01); H01M 4/02(2006.01); H01M 4/131(2010.01); H01M 4/62(2006.01); H01M 50/586(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지 (secondary battery), 바인더 (binder), 섬유 (fiber), 전단 강도 (shear strength), 시팅 (sheeting), MD 방향 (machine direction), TD 방향 (transverse direction), 폴리테트라플루오로에틸렌 (polytetrafluoroethylene, PTFE)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2023-0040922 A (LG ENERGY SOLUTION, LTD.) 23 March 2023 (2023-03-23) See claims 1, 4, 7, 9, 11 and 14; and paragraphs [0034], [0036]-[0038], [0043], [0048]-[0056], [0061] and [0105]. | 1-6,12-14 |
| Y | | 7-11 |
| Y | KR 10-2022-0105120 A (LG ENERGY SOLUTION, LTD.) 26 July 2022 (2022-07-26) See claim 2; and paragraphs [0050]-[0052], [0059] and [0071]. | 7-11 |
| A | JP 2024-037911 A (TESLA MOTORS INC.) 19 March 2024 (2024-03-19) See abstract; and claims 1-18. | 1-14 |
| A | KR 10-2023-0135543 A (LG ENERGY SOLUTION, LTD.) 25 September 2023 (2023-09-25) See abstract; and claims 1-12. | 1-14 |

☑ Further documents are listed in the continuation of Box C.     ☑ See patent family annex.

| | Special categories of cited documents: | | |
|---|---|---|---|
| "*" | | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 July 2025** | **11 July 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/004958** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2006-0025230 A (MAXWELL TECHNOLOGIES, INC.) 20 March 2006 (2006-03-20)<br>See abstract; claims 1-4; and paragraph [0061]. | 1-14 |

Form PCT/ISA/210 (second sheet) (July 2022)

EP 4 765 222 A1

### INTERNATIONAL SEARCH REPORT
**Information on patent family members**

International application No.

**PCT/KR2025/004958**

| Patent document cited in search report | | | Publication date (day/month/year) | Patent family member(s) | | | Publication date (day/month/year) |
|---|---|---|---|---|---|---|---|
| KR | 10-2023-0040922 | A | 23 March 2023 | CN | 116547826 | A | 04 August 2023 |
| | | | | EP | 4213243 | A1 | 19 July 2023 |
| | | | | JP | 2023-547114 | A | 09 November 2023 |
| | | | | KR | 10-2024-0099124 | A | 28 June 2024 |
| | | | | KR | 10-2678680 | B1 | 26 June 2024 |
| | | | | US | 2023-0402609 | A1 | 14 December 2023 |
| | | | | WO | 2023-043245 | A1 | 23 March 2023 |
| KR | 10-2022-0105120 | A | 26 July 2022 | CN | 116325211 | A | 23 June 2023 |
| | | | | EP | 4207338 | A1 | 05 July 2023 |
| | | | | US | 2023-0369557 | A1 | 16 November 2023 |
| | | | | WO | 2022-158759 | A1 | 28 July 2022 |
| JP | 2024-037911 | A | 19 March 2024 | CN | 111919315 | A | 10 November 2020 |
| | | | | CN | 111919315 | B | 30 January 2024 |
| | | | | CN | 117855484 | A | 09 April 2024 |
| | | | | EP | 3776696 | A1 | 17 February 2021 |
| | | | | JP | 2021-519495 | A | 10 August 2021 |
| | | | | JP | 7474703 | B2 | 25 April 2024 |
| | | | | KR | 10-2020-0138263 | A | 09 December 2020 |
| | | | | US | 11545666 | B2 | 03 January 2023 |
| | | | | US | 11811066 | B2 | 07 November 2023 |
| | | | | US | 2019-0305316 | A1 | 03 October 2019 |
| | | | | US | 2023-0075404 | A1 | 09 March 2023 |
| | | | | US | 2024-0154128 | A1 | 09 May 2024 |
| | | | | WO | 2019-191397 | A1 | 03 October 2019 |
| KR | 10-2023-0135543 | A | 25 September 2023 | CN | 118202482 | A | 14 June 2024 |
| | | | | EP | 4394912 | A1 | 03 July 2024 |
| | | | | JP | 2024-530280 | A | 16 August 2024 |
| | | | | WO | 2023-177244 | A1 | 21 September 2023 |
| KR | 10-2006-0025230 | A | 20 March 2006 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240048862